# EUROPEAN PATENT SPECIFICATION

(11) **EP 0 362 880 B1**
(45) Date of publication and mention of the grant of the patent: **07.01.1998**
(21) Application number: 89118606.6
(22) Date of filing: 06.10.1989
(51) Int. Cl.: G06F 12/08, G06F 12/12

(54) **Process for partially swapping real storage areas used by a program between a real storage and an auxiliary storage**
Verfahren zum teilweisen Austausch reeller, von einem Programm benutzter Speicherbereiche zwischen einem reellen Speicher und einem Hilfsspeicher
Procédé d'échange partiel de domaines de mémoire réelle utilisés par un programme entre une mémoire réelle et une mémoire auxiliaire

(30) Priority: 07.10.1988 JP 251767/88
(43) Date of publication of application: 11.04.1990
(73) Proprietor: HITACHI, LTD., Chiyoda-ku, Tokyo 100 (JP)
(72) Inventor: Kagimasa, Toyohiko, Hachioji-shi (JP); Takahashi, Kikuo, Hachioji-shi (JP); Mori, Toshiaki, Hachioji-shi (JP)
(74) Representative: Strehl Schübel-Hopf Groening & Partner

(56) References cited:
- EP-A- 0 280 019
- PATENT ABSTRACTS OF JAPAN, vol. 8, no. 171 (P-293)[1608], 8th August 1984; & JP-A-59 065 988
- J.L. ROSENFELD: "Information Processing", 1974, pages 235-241, North-Holland, Amsterdam, NL; H. OPDERBECK et al.: "Performance of the page fault frequency replacement alogirthm in a multiprogramming environment"
- IBM TECHNICAL DISCLOSURE BULLETIN, vol. 25, no. 9, February 1983, pages 4529- 4532, New York, US; T. BERETVAS et al.: "Extended swap control for paged data"

## Description

### BACKGROUND OF THE INVENTION

The present invention relates to main storage management processes for a computer system using a virtual storage.

In a conventional computer using a virtual storage type operating system, a demand paging system is known as a main storage management process. More specifically, as described in HITAC Manual "VOS3/ES Center Managed-JSS3 Vol. 3-", pp. 58-80, or P.B. Hansen: "Operating System Principles", Prentice-Hall, pp. 176-182 and 213-224, the main storage management system includes paging and swapping processes. The paging process maintains in executable form a job executed by a CPU while allocating to the job a real storage area which the job requires. It dynamically allocates and releases pages of a real storage to and from a virtual page which is a fixed length unit of a virtual storage. The time interval which has passed from the time when each real page allocated to a virtual page is referred to last to the current time (unreference time interval) is measured. When a shortage of real pages not already allocated to the virtual page occurs, the real pages are released in order of unreference time intervals. The swapping process is used to reserve further execution of a job under execution, to save the content of a real storage allocated to the job in an auxiliary storage to release (swap out) the area in the real storage, and then to load (swap in) in the real storage all the saved content when the job is recovered to a re-executable state. Paging is effected for each page in the real storage while swapping is effected for all pages which a program, for example, a job, is using.

In the conventional technique, if the capacity of the real storage which a job to be swapped occupies is large, a transfer quantity of data or a program deriving from swapping between the real storage and an auxiliary storage becomes large. These are unnecessary operations (overhead) for execution of a program. Therefore, a portion of a quantity of time for which a central processing unit (CPU) and an input/output (I/O) device are used for purpose other than execution of programs increases in proportion to the quantity of real storage. Thus, the job under execution is likely to wait for the CPU and I/O, so that a so-called slashed state is brought about in which the processing efficiency and responsiveness of the system decreases. If paging is used to solve a shortage of the real storage, paging occurs frequently because large-scaled jobs being executed compete with each other with respect to the real storage. Thus a slashed state is brought about disadvantageously as in the swapping of the large-scale job.

Japanese Patent Publication JP-A 60-54058 discloses a process for swapping a job with a reduced overhead. When a job performing transactions completes one transaction and then enters into a waiting state, it performs a swapping out operation. What is saved in the auxiliary storage is only a program area (including not only an area for program instructions but also a data buffers area designated by a user). The content of work areas which the system has allocated to the program is not required for the subsequent transaction, so that it is not saved to auxiliary storage, but released.

The prior art technique reduces an overhead on swapping by not saving the data in work areas to be not used later. The program area containing programs and data used later are all saved (swapped out) so that the overhead due to the swapping is still large for large scale jobs.

A multiple virtual storage system is also known in which each of the jobs can access a plurality of virtual storages. Such a system has other problems with paging and swapping.

A computer system using such a paging type multiple virtual storage process is described, for example, in IBM's Manual SA22-7200-0 "IBM Enterprise System Architecture/370 Principles of Operation", pp. 3-1 to 3-47, 5-26 to 5049.

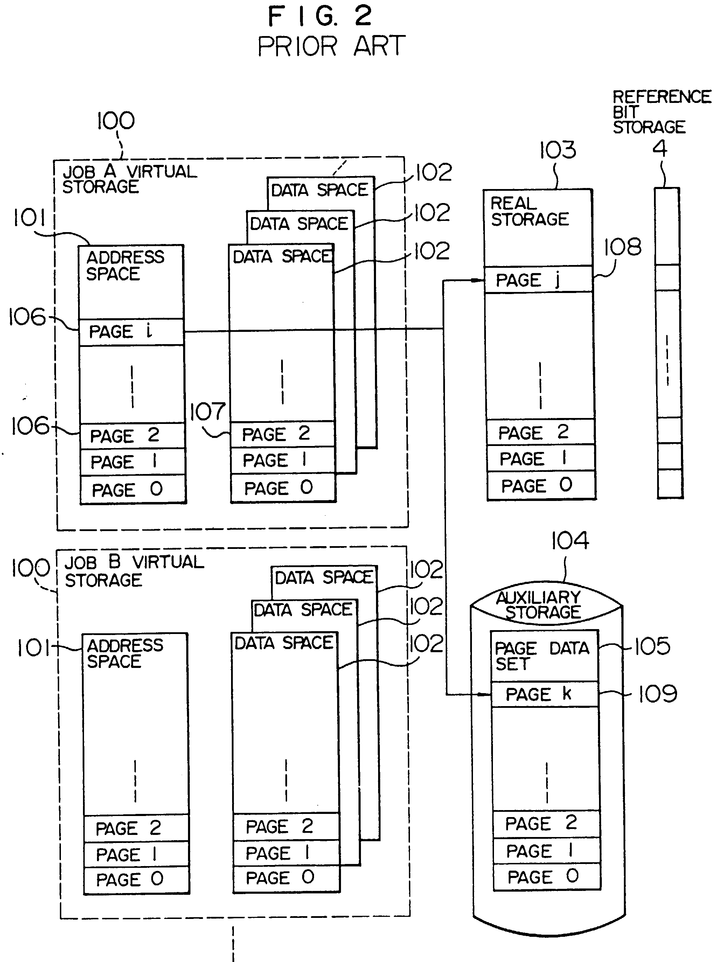

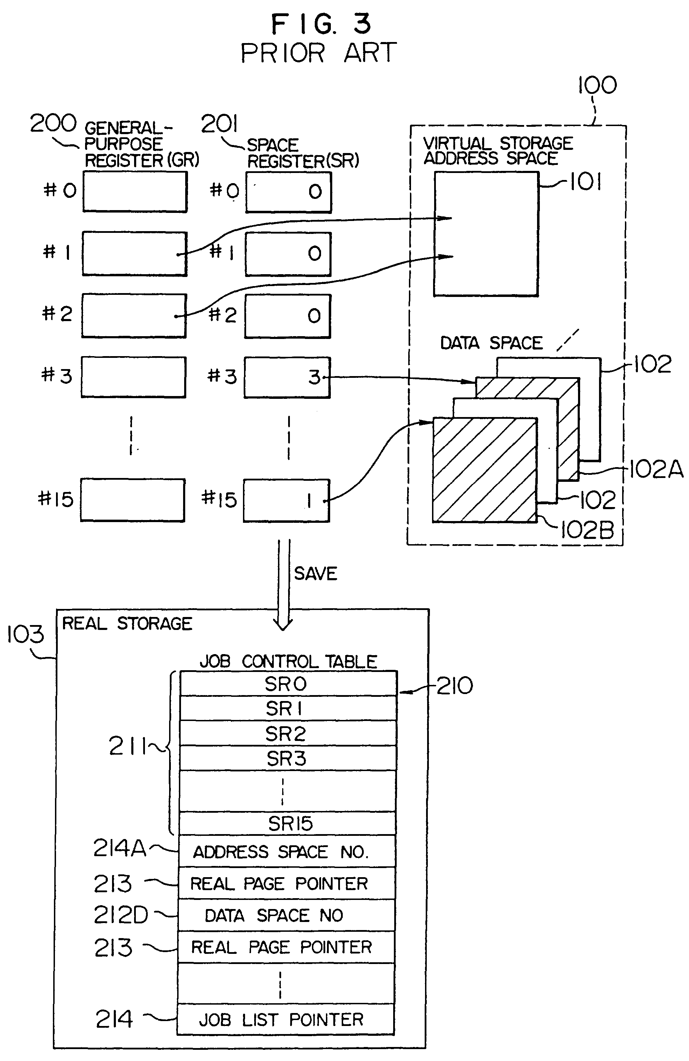

Specifically, as shown in Fig. 2, a virtual storage 100, a real storage 103, and an auxiliary storage 104 are each divided into units of a fixed length referred to as pages. A real page 108 and an auxiliary page 109 are allocated for each of virtual pages 106 and 107. For example, a j-th real page 108 and a k-th auxiliary page 109 are allocated to an i-th virtual page 106. The correspondence between these pages is provided by a conventional address converter (not shown). The virtual storage includes an address space capable of accommodating both of a program and data and a data space comprising a virtual storage space capable of accommodating only data. One job is capable of using one address space 101 and a plurality of data spaces 102. As shown in Fig. 3, the system includes a group of 16 space registers, designated generally by 201, which hold space identifiers, each indicative of one virtual space to which the address stored in each of a group of 16 general-purpose registers #0 - #15 and designated generally by 200, belongs. A reference bit storage 4 (Fig. 2) holds a reference bit indicative of whether the corresponding real page is referred to Fig. 3 schematically shows the relationship between the content of the group of general purpose registers, 200, the group of space registers, 201, and the spaces in the virtual storage. In Fig. 3, it is assumed that general purpose registers #1 and #2 have addresses in address space 101 in virtual storage 100 while general-purpose registers #3 and #15 each have addresses in one (102A or 102B) of data spaces 102 in virtual storage 100 and that the corresponding space registers #1, #2, #3 and #15 hold space identifiers 0, 0, 3 and 1 of address space 101, data space 102A and data space 102B, respectively. When a central processing unit (CPU) is taken away from the job under execution, the content of each space register 201 is saved in a space register saving area 211 in a job control table (JCT) 210 provided on real storage 103 and corresponding to the job. When the job is assigned to the CPU later and the execution of the job is restarted, the saved data is again loaded in the group of space registers 201. The job control table 210 includes a pair of address space identifier 212A and a real page pointer 213 indicative of the head of a list of real pages allocated to that space, and pairs of space identifier 212D and real point 213, one for each data space in addition to space register saving area 211. Reference numeral 214 denotes a pointer in a list of swapped-in jobs (in-job list) or in a list of swapped-out jobs (out-job list).

When pages allocated to a job area to be paged out in that prior art, the content of a virtual page having a longer unreference time interval is paged out irrespective of the virtual spaces (address space 101, data space 102) to which the job belongs to. A real page allocated to a virtual page in a virtual space whose space identifier is stored in space register 201 has a high probability that it will be used earlier than the real pages allocated to virtual pages in other virtual spaces, when the job is being executed by the CPO often.

However, if the unreference time interval for a real page having a high probability of earlier use is longer than that for a real page having a lower probability of earlier use, the former rather than the latter would undesirably be paged out.

Therefore, a paging process is desirable which reflects the degree of probability of earlier use of a real page.

Further, in the above prior art, when a job is to be swapped in, real pages which are allocated to virtual pages contained in the respective virtual spaces are swapped in an order of the virtual spaces predetermined in accordance with the order of space identifiers.

Generally, the content of the real page allocated to a virtual page belonging to a virtual storage, whose space identifier was held in space register 201 when the job under execution directly before the job was swapped out has a higher probability that the content will be used earlier than that of the real pages allocated to virtual pages in other virtual storage spaces which the job used before.

However, in the above conventional process, if the identifier of a virtual space for a real page having a lower probability of earlier use precedes the identifier of a virtual space for a real page having a higher probability of earlier use within the predetermined order of identifiers, the content of the latter can be swapped in earlier than that of the former. If the job is assigned the CPU and starts to be executed after the swapping-in of the job and before the content of all the virtual pages in all the virtual storage spaces allocated to the job has been swapped in, it can occur that the content of real pages is reloaded in space register 201 to which the real pages are allocated. Thus, a fault interruption of a virtual storage occurs and execution of the job is delayed. Therefore, swapping which reflects the degree of probability of earlier use of a real page is desirable.

### SUMMARY OF THE INVENTION

It is an object of the present invention to provide a main storage management method which is capable of using a main storage efficiently with low overhead under a large scale job environment, so that a quantity of pages to be swapped in and out is reduced.

This object is met by a method according to claim 1. Preferred embodiments are disclosed in the depending claim. The present invention provides a main storage management process in a computer system which executes a program in a multiple manner under control of a virtual storage type operating system, comprising the steps of:
(a) maintaining a first portion area of a real storage area, allocated to a first program and used later, in the allocated state while saving the contents of a second portion area of the real storage area in an auxiliary storage to release the second portion area when the first program is to be released; and
(b) loading the saved contents of the second portion area from the auxiliary storage to the real storage when the first program is to be swapped in.

Also, the present invention provides a real storage management process in a computer system controlled by a virtual storage type operating system to executes a program, which uses a plurality of virtual spaces, in a multiple manner comprising the step of:

When an area in a real storage allocated to a first program preferentially releasing a first area in the real storage allocated to a virtual area of a plurality of virtual spaces which the first program is using and which belongs to a virtual space designated by a space identifier set in one of a plurality of registers which hold identifiers for the virtual spaces which instructions in the first program executed and contained in a processor of the computer system use, over second areas in the real storage allocated to virtual areas belonging to other virtual spaces, or loading the contents of an auxiliary storage to the real storage from the auxiliary storage.

### BRIEF DESCRIPTION OF THE DRAWINGS

Fig. 1 is a schematic of the essential portion of one embodiment of an operating system according to the present invention;
Fig. 2 is a schematic of a conventional virtual storage in a multi-virtual space;
Fig. 3 illustrates a group of registers of a computer system used in the virtual storage of Fig. 2;
Fig. 4 is a flowchart of a page replacing process used in Fig. 1;
Fig. 5 is a flowchart of a swapping-out job selecting process 41 in Fig. 4;
Fig. 6 is a flowchart of a released page selecting process 34 or 44 in Fig. 4; and
Fig. 7 is a flowchart of a swapping-in sequence determining process 63 in Fig. 4.

### DESCRIPTION OF THE PREFERRED EMBODIMENT

An embodiment of the present invention will be described which is directed to a computer using a multi-virtual storage type operating system employed in IBM's Enterprise System, Architecture/370 described with respect to Figs. 2 and 3. The embodiment is the same as the computer of Figs. 2 and 3 except that it additionally includes an AF flag to be described later in more detail with respect to the job control table of Fig. 3. Therefore, the embodiment of the present invention will also be described with respect to Figs. 2 and 3.

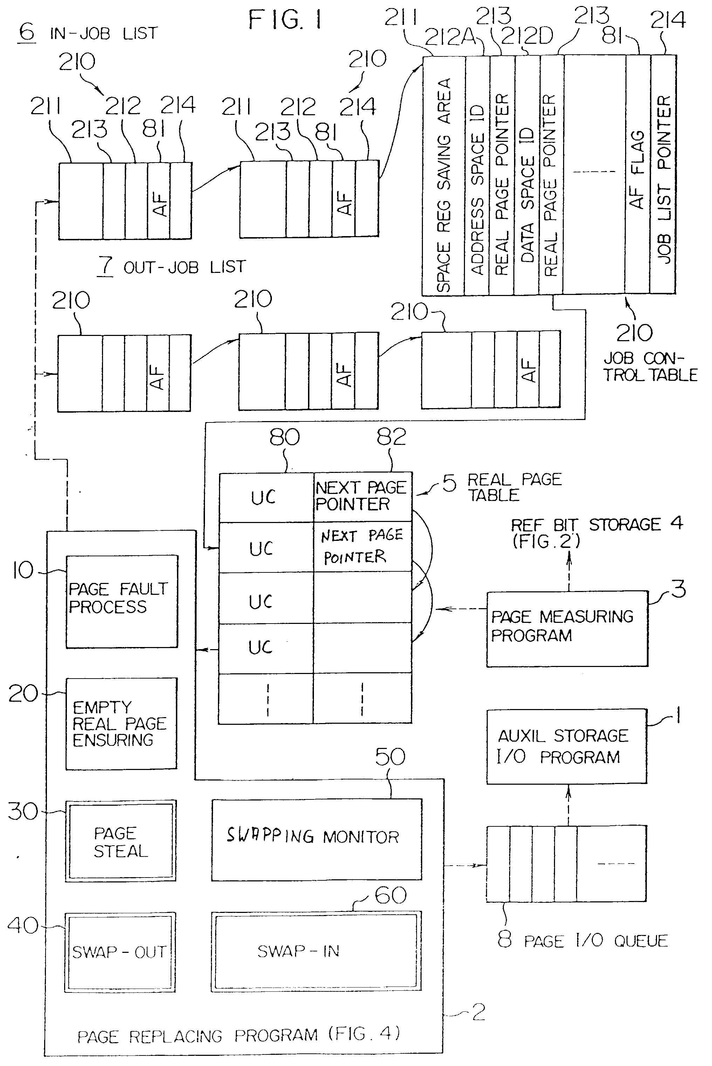

Fig. 1 shows a program associated with storage management and the essential portion of a table which are each provided in a particular area (not shown) in real storage 103 (Fig. 2).

Reference numeral 1 denotes an auxiliary storage I/O program; 2, a page replacing program; and 3, a page measuring program. The elements 1 and 3 are well-known. Reference numeral 5 denotes a real page table having an entry corresponding to a real page; 6 an in-job list which has a chain of job control tables 210 for a swapped-in job; 7, an out-job list which has a chain of job control tables 210 for a swapped-out state; and 8, a page I/O queue, having in an auxiliary storage I/O program 1 an entry which holds an I/O request for each page to auxiliary storage 104 (Fig. 2). Each of entries in real page table 5 includes an unreference counter 80 (UC) which is an index indicative of how many pages are not referred to for the CPU time which the corresponding job consumed, and a pointer 82 indicative of an entry for the next real page used in the job using the pages not referred to. The table 5 is well-known. Each job control table 210 has an AF flag which is set to 1 when there is a job corresponding to a state to which adaptive swapping more particularly swapping out is applied which is one of the features of the present invention. A job list pointer 214 in each job control table 210 has the address of a job control table next to in-job list 6 or out-job list 7. A real page pointer 212 in each job control table 210 indicates the address of an entry in real page table 5 corresponding to one of pages allocated to the corresponding spaces. The next page pointer 82 in this entry points to the address of the entry in the table 5 of another real page allocated already to the same job. Therefore, it will be seen which is the page allocated to a space which is being used by the job corresponding to real page pointer 212 in job control table 210 using pointer 212. A dispatcher (not shown), which is a well-known program of the operating system, gives the CPU and selects a job to be executed among a group of jobs corresponding to the job control table in in-job list 6. A group of jobs corresponding to the job control table in out-job list 7 is not given the CPU by the dispatcher and executed unless it is connected to in-job list 6.

Page measuring program 3 refers to reference bit storage 4 (Fig. 2) at predetermined time intervals to update unreference counter 80 for each real page in real page table 5. If reference bit storage 4 for a real page is on, the corresponding unreference counter 80 is cleared to 0 while if it is off, counter 8 is incremented by one. Such technique is well-known and further description thereof will be omitted. Pages replacing program allocates a real page to page fault interruption and, if empty pages are lacking, renders empty a real page allocated to a job by paging or swapping. Saving and loading the contents of real storage 103 (Fig. 2) in auxiliary storage 104 (Fig. 2) are effected in such a manner that page replacing program 2 registers a page I/O request for each real page in page I/O queue and that auxiliary storage I/O program 1 withdraws the requests in page I/O queue 8 sequentially, starting with the leading request, to start the I/O units. Processing auxiliary storage I/O program 1 is well-known and detailed description thereof will be omitted.

Page replacing program 2 includes a page fault processing routine 10, an empty real page routine 20, a page steal routine 30, swap-out routine 40, swapping monitor routine 50, and a swap-in routine 60. Adaptive swapping which is the first feature of the particular embodiment does not save the contents of all the real pages allocated to the job in the auxiliary storage as is the case with the conventional swapping, but selectively saves the contents of only the deficient number of real pages which is the difference between the real number of real pages and the target number of real pages. In page steal routine 30 or swap-out routine 40, a real page having a low probability of earlier use is preferentially saved in auxiliary storage 104 (Fig. 2). Conversely, in swap-in routine 60, a page having a higher probability of earlier use is preferentially loaded from auxiliary storage 104 onto real storage 103. There are the second feature of the present invention.

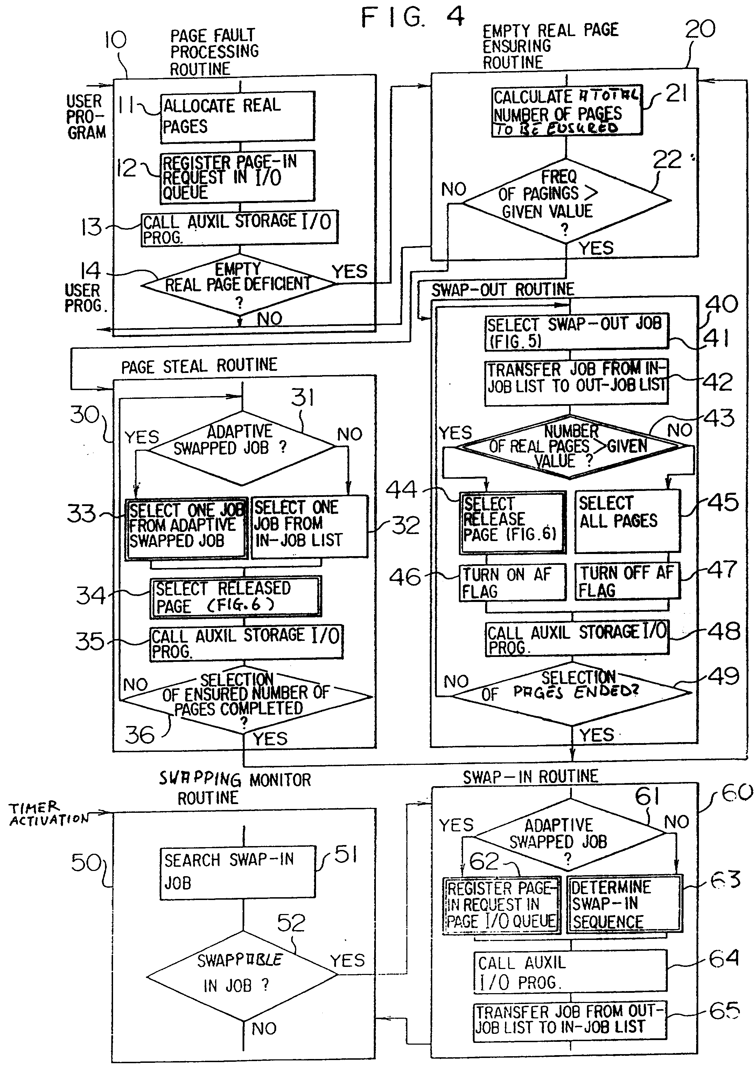

The processes performed by the respective routines of Fig. 4 will now be described.

### (1) Page Fault Processing Routine 10

In Fig. 4, unless a real page is allocated to a virtual page when accessed according to user program, an interruption of exception to address conversion is generated by a well-known address converter (not shown) and thus control passes to page fault processing routine 10, which may be a conventional one. In this routine, one empty real page is allocated to the virtual page (fault generation virtual page) (step 11). A paging request to input an auxiliary page allocated to the virtual page to the allocated real page is registered in page I/O queue 8 (step 12). Auxiliary storage I/O program 1 is called (step 13). As a result, if the remaining number of empty real pages is deficient compared to a target number of real pages determined separately by the system on the basis of the actual quantity of real storage, empty real ensuring routine 20 is started. If otherwise, control returns to the user program (step 14).

### (2) Empty Real Page Ensuring Routine 20

Empty real page ensuring routine may be a well-known one and is used to calculate the number of pages ensured to solve the deficience of empty real pages (step 21). The number of pages ensured is the sum of the target number of empty pages and a predetermined number of margin pages. If the frequency in occurrence of paging in the current system is higher than a given value, swapping is selected as the ensuring method to call swap-out routine 40. If it is lower, page steal routine 30 is called to solve the deficiency of real pages without swapping out any of the jobs already swapped in (step 22).

### (3) Page Steal Routine 30

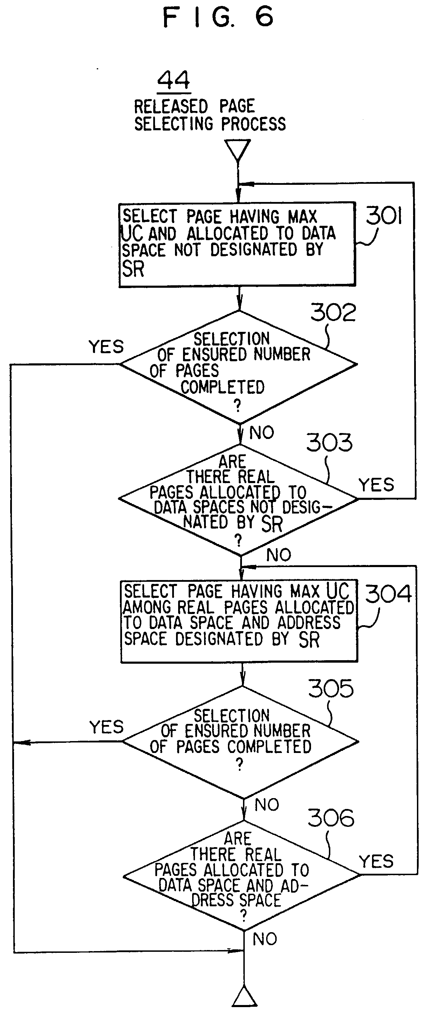

If page steal routine 30 is called in empty real page ensuring routine 20, it first determines whether there are any adaptive swapped-out jobs (having AF flag 81 which is on) in out-job list 7 (step 31). Since the adaptive swapped-out job is not executed for the time being, an attempt to first efficiently use the real page allocated to that job is advantageous for efficient use of the real storage, which is one feature of the page steal routine 30 in the particular embodiment. If there are such jobs in step 31, one of the jobs is selected as an object to be page stealed (step 33). If there are no adaptive swapped-out jobs, one job in the in-job list 6 is selected (step 32). If there are a plurality of jobs in in-job list 6, one of them is selected randomly, for example, using a random number. Thereafter, a plurality of real pages are selected which are to be released from the occupation of the job, in a process to be described in detail later with respect to Fig. 6, among the real pages allocated to the job selected at step 32 or 33 (step 34). In order to output data on those pages to auxiliary storage 104, auxiliary storage I/O program 1 is called (step 35). It is determined whether the number of released pages has arrived at the ensured number of pages (step 36). If not, control returns to step 31 to perform the same processing on the next job (steps 31 - 35). If so, control returns to empty real page ensuring routine 20.

In the released page selection process 34, page selection is effected for the job selected at step 32 or 33 in the method illustrated in Fig. 6. A real page having the maximum unreference counter (UC) value is selected, as an object to be released, among the real pages allocated to the virtual pages in data space 102 not designated by any member of the group of space registers (SR) 201 from the contents of the group of SRs 21, saved in an area 211 (Fig. 1) in job control table 210 in either of out-job list 7 or in-job list 6 for the job (step 301). Since a program is allocated to the address space which the job is using, the real page allocated to the group of data spaces which the job is using has a lower probability of earlier use than the real pages allocated to the address space. The real page allocated to data space 102 designated by any member of the group of SRs saved has a lower probability of earlier use than the real page allocated to the data spaces other than data space 102. Another feature of page steal routine 30 in the particular embodiment is to preferrentially select such a real page having a lower probability of earlier use as an object to be released. The search of such real page is effected by tracing a chain of entries in the real page table 5 pointed to by real page pointer 213 (Fig. 1) provided in correspondence to the one of data space identifiers 212D registered in job control table 210 and having no value in saving area 211 to find the maximum value of unreference counter (UC) in those entries. If selection of real pages to be ensured is completed, the processing ends (step 302). If not, the next page is searched by tracing a chain of entries in real page table 5 (step 303). If it is found, control returns to step 301, and, if not, a real page having the maximum UC value is selected, as an object to be released, among the real pages allocated to the address space 101 and data space 102 designated by the group of space registers 201 (step 304). If selection of pages to be ensured is completed, the processing ends (step 305). If not, the next page is searched by tracing the chain of entries in real page table 5 (step 306). If it is found, control returns step 304 whereas, if not, the processing ends.

### (4) Swap-Out Routine 40

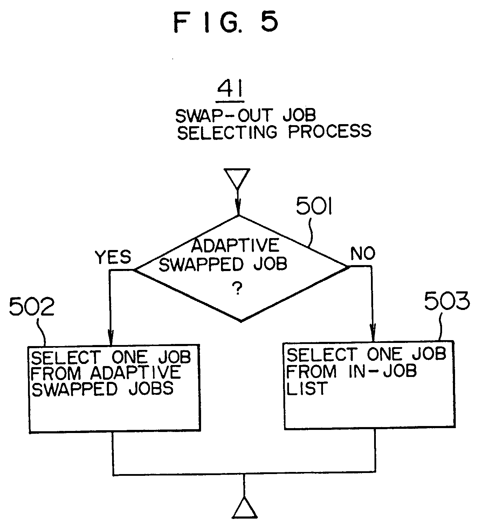

When swap-out routine 40 is called by empty real page ensuring routine 20, it selects one job to be swapped out (step 41). In this selection process 41, as shown in Fig. 5, it is first determined from the value of AF flag 81 in job control table 210 for each job whether the jobs in out-job list 7 are adaptive swapped-out ones (step 501). If adaptive swapped-out ones are found, one of them is selected (step 502). Since the adaptive swap-out jobs are not executed for the time being, release of the real pages allocated to those jobs is effective for effective use of the real storage, which is one feature of the swap-out routine in the particular embodiment. If there are no adaptive swapped-out jobs, one job is selected among jobs having job control tables 210 in in-job list 6 (swapped in at present) (step 503). If selection of the job to be swapped out is terminated, control returns to Fig. 4. The job control table 210 for the selected job is transferred from in-job list 6 to out-job list 6 (step 42) and it is determined whether the number of real pages allocated to the job is larger than a given value (step 43). If so, it is determined as being an adaptive swap-out one, and only part of real pages allocated to the job is selected as ones to be released in a method illustrated in Fig. 6 (step 44), which is another feature of the particular embodiment. Thereafter, AF flag 81 of job control table 210 is turned on (step 46). If the number of real pages mentioned above, is larger than the given value, the job is determined as a non-adaptive swap-out one, all the pages are selected as the object to be released (step 45) and AF flag 81 is turned off (step 47). In order to start swap-out I/O to output the pages, to be released, selected at the steps following either of steps 46 and 47, to auxiliary storage 104, auxiliary I/O program 1 is called (step 48). It is determined whether the released number of pages has arrived at the ensured number of pages (step 49). If not, control returns to step 41 to perform the same processes 41 - 48. If the released number of pages has arrived at the ensured number of pages, control returns to empty real page ensuring routine 20.

### (5) Swapping Monitor Routine 50

This routine is started at given time intervals by timer to search a job to be swapped in from the status of the system operation and the status of use of resources by the job (step 51). For example, if there are a large number of empty real pages because the job (having job control table 210 in in-job list 6) under execution ended, the job having job control table 210 in out-job list 7 for the longest time is searched as an object to be swapped in. If there is a swappable-in job, swap-in routine 60 is called (step 52).

### (6) Swap-In Routine 60

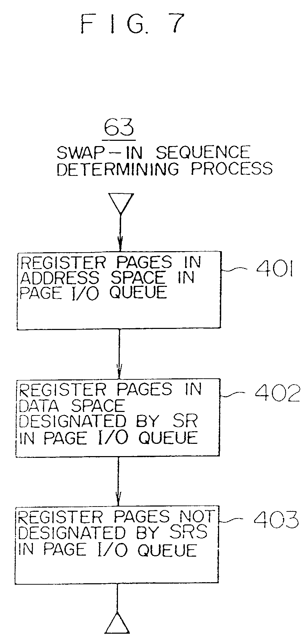

This routine determines from the value of AF flag 81 whether the searched swappable-in job is an adaptive swapped-out one (step 61). If so, a page-in request for pages saved at a time of swapping-out is registered in page I/O queue 8 (step 62). If otherwise, the swap-in sequence is determined in a process to be described in detail later in Fig. 7 (step 63). In order to start the swap-in I/O registered at the respective steps following either of steps 62 and 63, auxiliary storage I/O program 1 is called (step 64), and job control table 210 for the job is transferred from out-job list 7 to in-job list 6 (step 65). Therefore, the job can start immediately after it is given the CPU. Auxiliary storage I/O program 1 only starts the I/O for auxiliary storage 104, so that the execution of the job and the operation of auxiliary storage I/O are performed in a parallel manner. Thus the page I/O sequence is important. In the above swap-in sequence determining process 63, as shown in Fig. 7, a sequence is determined in which the contents of the virtual pages to which real pages are allocated are loaded from the auxiliary page when a job to be swapped in is swapped out. First, the I/O request for the pages allocated to the address space is registered in page I/O queue 8 (step 401) because real pages which hold a program are allocated to the address space, so that they have the highest probability of earlier use. The I/O request for the real pages allocated to the group of data spaces 102 designated by space register family 201 (Fig. 3) is registered in page I/O queue 8 (step 402). Finally, the I/O request for the real pages allocated to the group of data spaces 102 not designated by the group of space registers 201 is registered in page I/O queue 8 (step 403) because these real pages have the lowest probability of earlier use.

As will be obvious from the above, according to the present invention, a required portion of the real storage allocated to a job can be released, so that a quantity saved in the auxiliary storage is small, and the deficiency of the real storage can be eliminated with low overhead. The real storage is effectively used without release of an excessive quantity of the real storage, so that the processing efficiency and responsiveness of the system are improved. Furthermore, since swapping is completed with a small quantity of I/O irrespective of a quantity of the real storage occupied by the job, urgent swapping is effected at high speed.

Since, when a real storage is needed, the current job preferentially releases the real storage allocated to the virtual space the space identifier or the virtual address of which is not loaded on the corresponding register in the virtual storage space which the job can access, the real storage is used effectively, the frequency of occurrence of fault interruptions in the virtual storage is decreased, and hence the processing efficiency and responsiveness of the system are improved.

Furthermore, since the contents of the real storage allocated to the virtual storage space which the job saved in the auxiliary storage can access and of the space identifier or virtual address of which the job loaded on a register at a time of saving are loaded on the real storage earlier than the contents of the virtual storage space the space identifier or virtual address of which the job has not loaded on a register in the virtual storage space which the job saved in the auxiliary storage can access, the frequency of occurrence of fault interruptions in the virtual storage is decreased after reexecution of the job is started. Thus, the processing efficiency and responsiveness of the system are improved.

## Claims

1. A main storage management method for a computer system which executes programs by multiprogramming under control of a virtual storage type operating system, said method comprising the steps of:
(a) maintaining a first portion of a real storage area allocated to one of the programs within a real storage (103) of the computer system in a state allocated to the program when the program is to be swapped out, while saving a content of a second portion of the real storage area allocated to the program to be swapped-out into an auxiliary storage (104) thereby releasing the second portion from the program to be swapped-out, and
(b) loading the saved content of the second portion from the auxiliary storage (104) into the real storage (103) of the computer system when the program is to be swapped-in.

2. The method according to claim 1, further comprising a step of determining, before execution of step (a), a quantity of the second portion from a target quantity determined by the computer system.

3. The method according to claim 1 or 2, further including the step of preferentially releasing an area of the first portion from the program then releasing areas in the real storage (103) of the computer system which are allocated to programs in a swapped-in state, after the step (a), to provide a new non-allocated area.

4. The method according to any of claims 1 to 3, wherein the step (a) includes selecting, as the second portion, a portion of the real storage area which is allocated to the program to be swapped-out and which has not been referred to for a time longer than that for other portions of the real storage area allocated to the program to be swapped-out.

5. The method according to any of claims 1 to 3, wherein the step (a) includes selecting, as the second portion, a portion of the real storage area which is allocated to the program to be swapped-out and which has a probability that it will be used by the program later than other portions of the real storage area allocated to the program to be swapped-out.

6. The method according to claim 5, wherein the computer system includes a plurality of space registers (201), each holds an identifier for one of a plurality of virtual spaces (100) used by an instruction of a program under execution, and wherein the step (a) includes a step of selecting, as the second portion, a portion of the real storage area allocated to a virtual area belonging to a virtual space designated by an identifier which was not stored in any of the plurality of space registers when the program was executed before it is swapped-out.

7. The method according to claim 6, further comprising, when an area in a real storage (104) allocated to a program is to be released from the program to provide a new non-allocated area, the steps of releasing the area in the real storage (104) allocated to the virtual area which belongs to the virtual space designated by the identifier which was not stored in any of the plurality of the space registers (102) and allocating the released area to another program.

8. The method according to any of claims 1 to 7, wherein the step (b) includes a step of loading a portion of the saved content of the second portion into the real storage (103) which has a probability that it will be used by the program earlier than other portions of the saved content of the second portion.

9. The method according to claim 8, wherein the computer system includes a plurality of space registers (201) each holds an identifier for one of a plurality of virtual spaces (100) used by an instruction of a program under execution and wherein the step (b) includes a step of loading the saved content of the second portion allocated to a virtual area belonging to a virtual space designated by an identifier which was set in one of the plurality of space registers when the program was executed before it is swapped-out.

## Patentansprüche

1. Hauptspeicher-Managementverfahren für ein Computersystem, das Programme im Mehrprogrammbetrieb unter Steuerung durch ein Betriebssystem vom virtuellen Speichertyp ausführt, mit den Verfahrensschritten:
(a) Beibehalten eines ersten Abschnitts eines Realspeicherbereichs, der einem der Programme in einem Realspeicher (103) des Computersystems zugewiesen ist, in einem dem Programm zugewiesenen Zustand, wenn das Programm ausgelagert werden soll, während der Inhalt eines zweiten Abschnitts des Realspeicherbereichs, der dem auszulagernden Programm zugewiesen ist, in einem Hilfsspeicher (104) gesichert wird, wodurch der zweite Abschnitt vom auszulagernden Programm freigegeben wird, und
(b) Laden des gesicherten Inhalts des zweiten Abschnitts aus dem Hilfsspeicher (104) in den Realspeicher (103) des Computersystems, wenn das Programm eingelagert werden soll.

2. Verfahren gemäß Anspruch 1, wobei vor dem Ausführen von Schritt (a) eine Größe des zweiten Abschnitts von einer durch das Computersystem bestimmten Zielgröße bestimmt wird.

3. Verfahren gemäß Anspruch 1 oder 2, wobei vorzugsweise ein Bereich des ersten Abschnitts vom Programm freigegeben wird, dann wenn Bereiche in dem Realspeicher (103) des Computersystems, die Programmen in einem Einlagerungszustand zugeteilt sind, nach dem Schritt (a) freigegeben werden, um für einen neuen nicht zugewiesenen Bereich zu sorgen.

4. Verfahren gemäß einem der Ansprüche 1 bis 3, wobei im Schritt (a) als der zweite Abschnitt ein Abschnitt des Realspeicherbereichs ausgewählt wird, der dem auszulagernden Programm zugewiesen ist und auf den länger als auf andere Abschnitte des Realspeicherbereichs, die dem auszulagernden Programm zugewiesen sind, nicht mehr Bezug genommen worden ist.

5. Verfahren gemäß einem der Ansprüche 1 bis 3, wobei im Schritt (a) als der zweite Abschnitt ein Abschnitt des Realspeicherbereichs ausgewählt wird, der dem auszulagernden Programm zugewiesen ist und der eine Wahrscheinlichkeit dafür besitzt, durch das Programm später als andere Abschnitte des Realspeicherbereichs, die dem auszulagernden Programm zugewiesen sind, eingesetzt zu werden.

6. Verfahren gemäß Anspruch 5, wobei das Computersystem eine Vielzahl von Leerstellenregister (201) aufweist, die jeweils eine Identifizierung für eine virtuelle Leerstelle aus einer Vielzahl von virtuellen Leerstellen (100) speichern, die von einem Befehl eines gerade ausgeführten Programms verwendet werden, und wobei im Schritt (a) als der zweite Abschnitt ein Abschnitt des Realspeicherbereichs ausgewählt wird, der einem zu einer virtuellen Leerstelle gehörenden virtuellen Bereich zugeordnet ist und durch eine Identifizierung bestimmt wird, die in keiner der Vielzahl von Leerstellenregistern gespeichert war, als das Programm ausgeführt wurde, bevor es ausgelagert wird.

7. Verfahren gemäß Anspruch 6, weiter aufweisend die Verfahrensschritte, wenn ein Bereich in einem Realspeicher (104), der einem Programm zugewiesen ist, von dem Programm freigegeben werden soll, um für einen neuen nicht zugewiesenen Bereich zu sorgen:
Freigeben des Bereichs im Realspeicher (104), der dem virtuellen Bereich zugeordnet ist, der zu der virtuellen Leerstelle gehört, und durch die Identifizierung, die in keinem der Vielzahl von Leerstellenregistern (102) gespeichert war, bestimmt wird, und Zuweisen des freigegebenen Bereichs zu einem anderen Programm.

8. Verfahren gemäß einem der Ansprüche 1 bis 7, wobei im Schritt (b) ein Abschnitt des gesicherten Inhalts des zweiten Abschnitts in den Realspeicher (103) geladen wird, der eine Wahrscheinlichkeit dafür besitzt, durch das Programm früher als andere Abschnitte des gesicherten Inhalts des zweiten Abschnitts verwendet zu werden.

9. Verfahren gemäß Anspruch 8, wobei das Computersystem eine Vielzahl von Leerstellenregistern (201) enthält, die jeweils eine Identifizierung für eine virtuelle Leerstelle aus einer Vielzahl von virtuellen Leerstellen (100) speichern, die von einem Befehl eines geraden ausgeführten Programms verwendet werden, und wobei im Schritt (b) der gesicherte Inhalt des zweiten Abschnitts geladen wird, der einem virtuellen Bereich zugewiesen ist, der zu einer virtuellen Leerstelle gehört, und durch eine Identifizierung bestimmt wird, die in einem Leerstellenregister aus der Vielzahl von Leerstellenregistern festgelegt wurde, als das Programm ausgeführt wurde, bevor es ausgelagert wird.

## Revendications

1. Procédé de gestion de mémoire principale pour un système d'ordinateur qui exécute des programmes par multiprogrammation sous la commande d'un système d'exploitation du type à mémoire virtuelle, ledit procédé comprenant les étapes suivantes :
(a) le maintien d'une première partie d'une zone de mémoire réelle attribuée à l'un des programmes à l'intérieur d'une mémoire réelle (103) du système d'ordinateur dans un état attribué au programme lorsque le programme doit être transféré sur mémoire auxiliaire, tout en sauvegardant un contenu d'une deuxième partie de la zone de mémoire réelle attribuée au programme devant être transféré sur mémoire auxiliaire dans une mémoire auxiliaire (104), de façon à libérer par conséquent la deuxième partie du programme devant être transféré sur mémoire auxiliaire, et
(b) le chargement du contenu sauvegardé de la deuxième partie de la mémoire auxiliaire (104) à la mémoire réelle (103) du système d'ordinateur lorsque le programme doit être transféré en mémoire centrale.

2. Procédé selon la revendication 1, comprenant de plus l'étape de détermination, avant l'exécution de l'étape (a), d'une quantité de la deuxième partie à partir d'une quantité cible déterminée par le système d'ordinateur.

3. Procédé selon la revendication 1 ou 2, comprenant de plus l'étape de libération préférentielle d'une zone de la première partie du programme, puis de libération des zones dans la mémoire réelle (103) du système d'ordinateur qui sont attribuées aux programmes dans un état transféré en mémoire centrale, après l'étape (a), de façon à procurer une nouvelle zone non attribuée.

4. Procédé selon l'une quelconque des revendications 1 à 3, dans lequel l'étape (a) comprend la sélection, comme deuxième partie, d'une partie de la zone de mémoire réelle qui est attribuée au programme devant être transféré sur mémoire auxiliaire et qui n'a pas été sollicitée pendant un temps supérieur à celui d'autres parties de la zone de mémoire réelle attribuée au programme devant être transféré sur mémoire auxiliaire.

5. Procédé selon l'une quelconque des revendications 1 à 3, dans lequel l'étape (a) comprend la sélection, comme deuxième partie, d'une partie de la zone de mémoire réelle qui est attribuée au programme devant être transféré sur mémoire auxiliaire et qui a une probabilité d'être utilisée par le programme plus tard que d'autres parties de la zone de mémoire réelle attribuée au programme devant être transféré sur mémoire auxiliaire.

6. Procédé selon la revendication 5, dans lequel le système d'ordinateur comprend une pluralité de registres d'espace (201) dont chacun conserve un identifiant pour l'un d'une pluralité d'espaces virtuels (100) utilisés par une instruction d'un programme qui est exécuté, et dans lequel l'étape (a) comprend une étape de sélection, comme deuxième partie, d'une partie de la zone de mémoire réelle attribuée à une zone virtuelle appartenant à un espace virtuel désigné par un identifiant qui n'a été mémorisé dans aucun de la pluralité de registres d'espace lorsque le programme a été exécuté avant d'être transféré sur mémoire auxiliaire.

7. Procédé selon la revendication 6, comprenant de plus, lorsqu'une zone dans une mémoire réelle (104) attribuée à un programme doit être libérée du programme afin de procurer une nouvelle zone non attribuée, les étapes de libération de la zone dans la mémoire réelle (104) attribuée à la zone virtuelle qui appartient à l'espace virtuel désigné par l'identifiant qui n'a été mémorisé dans aucun de la pluralité de registres d'espace (102) et d'attribution de la zone libérée à un autre programme.

8. Procédé selon l'une des revendications 1 à 7, dans lequel l'étape (b) comprend une étape de chargement d'une partie du contenu sauvegardé de la deuxième partie dans la mémoire réelle (103) qui a une probabilité d'être utilisée par le programme avant d'autres parties du contenu sauvegardé de la deuxième partie.

9. Procédé selon la revendication 8, dans lequel le système d'ordinateur comprend une pluralité de registres d'espace (201) dont chacun conserve un identifiant pour l'un d'une pluralité d'espaces virtuels (100) utilisés par une instruction d'un programme qui est exécuté, et dans lequel l'étape (b) comprend une étape de chargement du contenu sauvegardé de la deuxième partie attribuée à une zone virtuelle appartenant à un espace virtuel désigné par un identifiant qui a été établi dans l'un de la pluralité de registres d'espace lorsque le programme a été exécuté avant d'être transféré sur mémoire auxiliaire.
